# EUROPÄISCHE PATENTSCHRIFT

(11) **EP 3 099 697 B1**
(45) Veröffentlichungstag und Bekanntmachung des Hinweises auf die Patenterteilung: **13.09.2017**
(21) Anmeldenummer: 15701346.7
(22) Anmeldetag: 26.01.2015
(51) Int. Cl.: C07F 7/18, C08G 18/80, C08G 18/00, C08G 18/48, C08G 18/62, C08G 18/71, C08G 18/73, C08G 18/75, C08G 18/76, C08G 18/10, C08G 18/28, C09D 183/16, C09J 175/04, C09J 183/16

(54) **SILANMODIFIZIERTE FORMAMIDE**
SILANE-MODIFIED FORMAMIDES
FORMAMIDES MODIFIÉS PAR UN SILANE

(30) Priorität: 31.01.2014 EP 14153502
(43) Veröffentlichungstag der Anmeldung: 07.12.2016
(73) Patentinhaber: Covestro Deutschland AG, 51373 Leverkusen (DE)
(72) Erfinder: EGGERT, Christoph, 50733 Köln (DE)
(74) Vertreter: Levpat
(86) Internationale Anmeldenummer: PCT/EP2015/051445
(87) Internationale Veröffentlichungsnummer: WO 2015/113923

(56) Entgegenhaltungen:
- DATABASE CA [Online] CHEMICAL ABSTRACTS SERVICE, COLUMBUS, OHIO, US; 2013, MATSUMOTO, TAKESHI: "Urethane primer compositions with high storage stability and good warm water-resistant adhesion to hardly adhesive coated surfaces", XP002722676, gefunden im STN Database accession no. 2013:1797392 & JP 2013 234304 A 21. November 2013 (2013-11-21)
- DATABASE CA [Online] CHEMICAL ABSTRACTS SERVICE, COLUMBUS, OHIO, US; 20. Mai 2013 (2013-05-20), FUKUI, HIROSHI ET AL: "Polyurethane adhesive compositions for polymer glasses", XP002722674, gefunden im STN Database accession no. 2013:776018 & JP 2013 095759 A (YOKOHAMA RUBBER CO LTD) 20. Mai 2013 (2013-05-20)

## Beschreibung

### Technisches Gebiet der Erfindung

Die vorliegende Erfindung betrifft neue silanmodifizierte Formamide der Formel (I) zur Beschichtung, Verklebung und/oder Abdichtung von diversen Substratmaterialien, wie z.B. Metall, Holz, Glas und/oder Kunststoff. Außerdem wird ein reaktives Einkomponenten-Klebstoffsystem, umfassend die erfindungsgemäßen, silanmodifizierten Formamide der Formel (I), zur Verfügung gestellt.

Die erfindungsgemäßen, silanmodifizierten Formamide der Formel (I) können weiter als Ausgangsmaterial für die Herstellung silanmodifizierter Prepolymere und Polymere der Formel (IV) eingesetzt werden, die ebenso beispielsweise zur Beschichtung, Verklebung und/oder Abdichtung diverser Substratmaterialien geeignet sind.

### Hintergrund der Erfindung

Silanmodifizierte Polymere sind allgemein seit Jahren bekannt und Dicht- bzw. Klebstoffe, die auf silanmodifizierten Prepolymeren bzw. Polymeren basieren, haben sich für verschiedenste Anwendungen, zum Beispiel bei Nahtabdichtungen im Fahrzeugbau, bei Fenstern oder im Fassadenbau, bewährt.

Ganz allgemein versteht man unter silanmodifizierten Polymeren (die vor der Verarbeitung als Prepolymere vorliegen) Polymere, die Silangruppen mit hydrolysierbaren Resten enthalten und deren Polymerrückgrat nicht im Wesentlichen aus O-Si-O-Si-Ketten aufgebaut wird, wie das bei den Silikonen der Fall ist, sondern aus C-C-Ketten, die in den meisten Fällen durch Heteroatome unterbrochen sind und Urethan-, Ether-, Ester-, Harnstoff-, Amid- und andere Struktureinheiten enthalten. Unter Feuchtigkeitseinwirkung werden die Reste an den Silangruppen, zum Beispiel üblicherweise Acetat- oder Alkoxy-Gruppen, hydrolysiert, wobei reaktive Silanole entstehen, die im Anschluss unter Wasser-, Alkohol- oder Essigsäureabspaltung zu einem hochmolekularen Netzwerk kondensieren und aushärten.

Der Wert dieser silanmodifizierten Polymere liegt im Wesentlichen in ihrem besonderen Eigenschaftsprofil. Denn zum einen zeichnen sich Beschichtungs-, Kleb- oder Dichtstoffe, die silanmodifizierte Polymere enthalten, durch eine hohe Haftung auf unterschiedlichsten Substraten ohne aufwändige Vorbehandlung (kein Primer notwendig) aus. Dies liegt daran, dass auf anorganischen Substratoberflächen normalerweise OH-Gruppen vorhanden sind, die mit den reaktiven Silanolen des Polymers, die unter Einwirkung von Feuchtigkeit entstehen, reagieren können. Zum anderen können mit Hilfe des Polymerrückgrats die Eigenschaften der silanmodifizierten Polymere an eine Vielzahl verschiedenster Anwendungen angepasst werden.

So basieren die derzeit auf dem Markt kommerziell erhältlichen, silanmodifizierten Polyurethane und Polyharnstoffe auf einem hochmolekularen Rückgrat, das (i) durch Umsetzung von NCOhaltigen Prepolymeren mit Aminosilanen oder (ii) durch Umsetzung von OH-terminierten Prepolymeren, wie zum Beispiel Polyethern, Polyurethanen oder Polyestern, mit NCO-funktionellen Silanen erzeugt wird, wie in folgendem Formelschema gezeigt wird:
i) 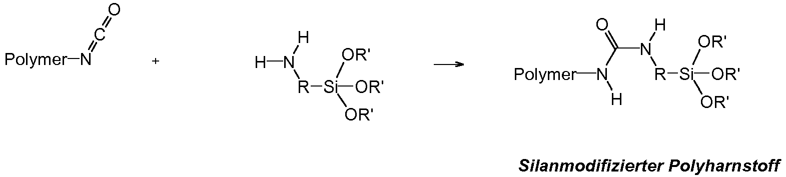
ii)

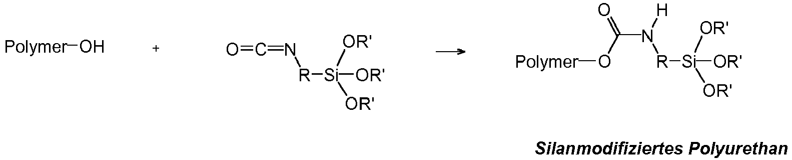

Ein Nachteil von Beschichtungs-, Kleb- und Dichtstoffen, die auf silanmodifizierten Polyharnstof fen basieren, liegt aber in der hohen Viskosität ihrer Prepolymere. Aufgrund der hohen Viskosität ist die Anwendung silanmodifizierter Polyharnstoffe nur eingeschränkt möglich, da die einzusetzenden Beschichtungs- bzw. Dichtstoffe normalerweise flüssig bis pastös auf die zu beschichtenden bzw. verklebenden Substratteile aufgetragen werden müssen. Ein zu viskoses Prepolymer erschwert oder verunmöglicht folglich die Verwendung als Beschichtungs-, Kleb- und/oder Dichtstoff.

Aus der JP 2013 234304 A und der JP 2013 095759 A sind silanmodifizierte Urethane mit einer Struktureinheit "-NPhC(O)N(H)(CH2)6NCO" in CAS RN "1435054-41-3" und ihre Verwendung in der Verklebung oder Abdichtung von Materialien bekannt. Der Unterschied zum Gegenstand der vorliegenden Erfindung besteht in der Substitution der Urethaneinheit d.h. "-NPhC(O)N(H)(CH2)6NCO" in diesem Stand der Technik im Vergleich zur Struktureinheit "-N(CHO)C(O)N(H)RX" in den Verbindungen der Formel (I) und zur Struktureinheit "-N(CHO)C(O)N(H)RN(H)C(O)OY" in den Verbindungen der Formel (IV) in der vorliegenden Anmeldung.

Weiterhin ist der Härtegrad der entstehenden Beschichtung, Verklebung und/oder Dichtung als Endprodukt nach der Silan-Vernetzung für die jeweilige Anwendung entscheidend. Bei silanmodifizierten Polyharnstoffen liegen normalerweise Endprodukte mit einem hohen Härtegrad vor. Im Gegensatz dazu stellen silanmodifizierte Polyurethane nach der Aushärtung weichere Endprodukte zur Verfügung. Allerdings ist die Synthese silanmodifizierter Polyurethane mit hohem Silangehalt aufgrund der relativ teuren NCO-funktionalisierten Silan-Vorläufer wirtschaftlich schwierig umzusetzen.

In diesem Zusammenhang spielt außerdem der monomere NCO-Gehalt in silanmodifizierten Polymeren eine entscheidende Rolle: aufgrund des nicht zu vernachlässigenden Dampfdrucks der Isocyanate (bereits bei Raumtemperatur) können bei einem Sprühauftrag bereits Isocyanat-Dämpfe auftreten, die gesundheitsschädlich oder zumindest sensibilisierend sein können. Folglich ist die Entwicklung von reaktiven Prepolymeren, die im Wesentlichen frei von Isocyanat-Monomeren sind, und jedenfalls unter dem Expositionsleitwert (Total Reactive Isocyanate Group concentration TRIG) gemäß der technischen Regel für Gefahrstoffe (TRGS) 430 (Ausg. 3/2009) von 0,018 mg/m³ NCO liegen, vorzugsweise unterhalb von 0,01 mg/m³, besonders bevorzugt unterhalb 0,001 mg/m³, wünschenswert.

### Aufgabe der vorliegenden Erfindung

Der vorliegenden Erfindung liegt insofern die Aufgabe zugrunde, alternative silanmodifizierte Prepolymere bereitzustellen sowie Verfahren zur Herstellung solcher Verbindungen, deren Verwendung sowie reaktive Einkomponenten-Klebstoffbeschichtungssysteme, umfassend solche Verbindungen. Ferner die Verwendung solcher Einkomponenten-Klebstoffbeschichtungssysteme als reaktive Einkomponenten-Klebstoffsysteme, die solche Verbindung umfassen sowie die Verwendung eines solchen reaktiven Einkomponenten-Klebstoffsystems in einem Kit und einem Verbundkörper, der durch ein solches Einkomponenten-Klebstoffsystem oder Kit verbunden ist. Diese Aufgabe wurde durch die Verbindungen, Verfahren, Verwendungen, Systeme, Verbundkörper und Kits entsprechend der Ansprüche 1 - 16 gelöst.

Insbesondere wird ein reaktives Einkomponenten-Klebstoffsystem bereitgestellt, das aufgrund einer niedrigeren Viskosität und geringeren Kristallinität einfacher zu handhaben ist und das gleichzeitig eine hohe chemische Stabilität der Endprodukte ermöglicht. Angestrebt werden ferner kostengünstig herstellbare polymere Endprodukte mit einer vorteilhaften Balance von Eigenschaften, wie insbesondere Aushärtungsgrad und chemischer Stabilität.

### Zusammenfassung der Erfindung

Die vorliegende Erfindung betrifft Verbindungen der Formel (I) gemäß Patentanspruch 1, die als Einkomponenten-Klebstoffsystem/Beschichtungssystem zur verbesserten Beschichtung, Verklebung und/oder Abdichtung diverser Substratmaterialien, wie z.B. Metall, Holz, Glas und/oder Kunststoff, geeignet sind.

Weiter können die Verbindungen der Formel (I) erfindungsgemäß genutzt werden, um silanmodifizierte Prepolymere der Formel (IV) bereitzustellen, die ebenfalls als Einkomponenten-Klebstoffsystem/Beschichtungssystem zur verbesserten Beschichtung, Verklebung und/oder Abdichtung diverser Substratmaterialien, wie z.B. Metall, Holz, Glas und/oder Kunststoff, eingesetzt werden können.

Im endgültig ausgehärteten Zustand stellt die Erfindung über -Si-O-Si-Brücken kondensierte Polymere als dauerhafte Beschichtungen, Kleb- und/oder Dichtstoffe zur Verfügung.

Weiterhin stellt die vorliegende Erfindung Verfahren zur Herstellung der Verbindungen der Formel (I) und der Prepolymere der Formel (IV) zur Verfügung.

### Ausführliche Beschreibung der Erfindung

Erfindungsgemäß werden Verbindungen der Formel (I) bereitgestellt: 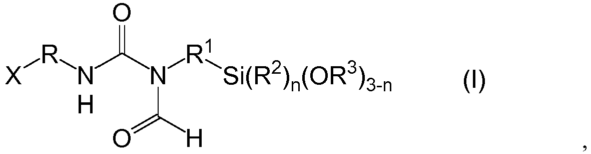 wobei in der Formel (I) gilt:
X stellt eine gegebenenfalls substituierte, lineare oder verzweigte, aliphatische, alizyklische, araliphatische, heterozyklische und/oder aromatische Struktureinheit mit 1 bis 40 Kohlenstoffatomen, wobei ein oder mehrere nicht benachbarte Methylengruppen jeweils durch O oder S ersetzt sein können, -H oder -NCO dar;
R stellt eine mindestens zweiwertige, gegebenenfalls substituierte, lineare oder verzweigte, aliphatische, alizyklische, araliphatische und/oder aromatische Struktureinheit mit 1 bis 40 Kohlenstoffatomen dar, wobei ein oder mehrere nicht benachbarte Methylengruppen jeweils durch O oder S ersetzt sein können;
R¹ stellt eine mindestens zweiwertige, gegebenenfalls substituierte, lineare oder verzweigte, aliphatische, alizyklische, araliphatische und/oder aromatische Struktureinheit mit 1 bis 12 Kohlenstoffatomen dar, wobei ein oder mehrere nicht benachbarte Methylengruppen jeweils durch O oder S ersetzt sein können;
R² und R³ stellen jeweils unabhängig voneinander eine gegebenenfalls substituierte, lineare oder verzweigte, aliphatische Gruppe mit 1 bis 12 Kohlenstoffatomen dar; und
n stellt eine ganze Zahl von 0 bis 2 dar.

In einer erfindungsgemäßen Ausführungsform werden folglich Verbindungen der Formel (I) bereitgestellt.

In einer weiteren erfindungsgemäßen Ausführungsform wird ein silanmodifiziertes Prepolymer der Formel (IV) bereitgestellt: 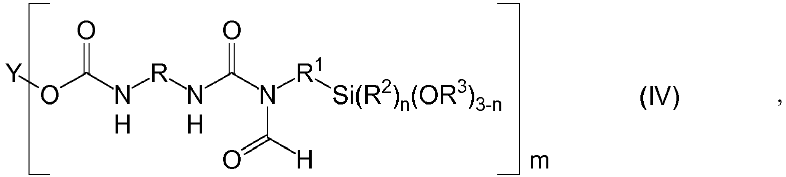 wobei R, R¹, R², R³ und n die oben angegebenen Bedeutungen haben, Y eine m-wertige, gegebenenfalls substituierte, lineare oder verzweigte, aliphatische, alizyklische, araliphatische, heterozyklische und/oder aromatische Struktureinheit mit 1 bis 40 Kohlenstoffatomen ist oder eine um m OH-Radikale reduzierte Struktureinheit eines mehrwertigen Alkohols (Polyols), oder eines Polyurethan-, Polyharnstoff-, Polyester-, Polyether-, Polycarbonat-, Polyacetal-, Polyacrylat-, Polyesteramid- oder Polythioetherpolyols darstellt und m eine Zahl von 1 bis 10 ist, wobei in diesem Fall m auch ein Bruch sein kann, z.B. wenn Y ein Polyacrylat mit einem mittleren OH-Gruppengehalt von 2,4 ist.

In einer weiteren erfindungsgemäßen Ausführungsform wird ein Verfahren zur Herstellung der Verbindung der Formel (I) zur Verfügung gestellt, umfassend Umsetzung des silanmodifizierten Formamids der Formel (Ia) mit dem Isocyanat der Formel (Ib): 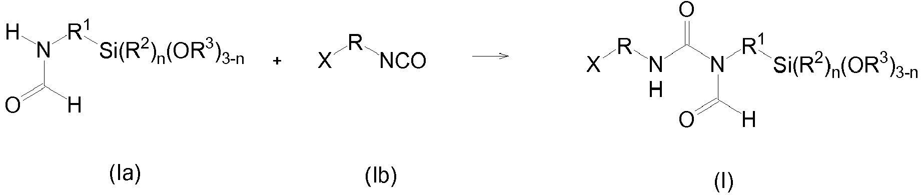 wobei die Gruppen X, R, R¹, R², R³ und n wie in Anspruch 1 definiert sind.

In einer weiteren erfindungsgemäßen Ausführungsform wird ein Verfahren (A) zur Herstellung des silanmodifizierten Prepolymers der Formel (IV) offenbart:
(A) 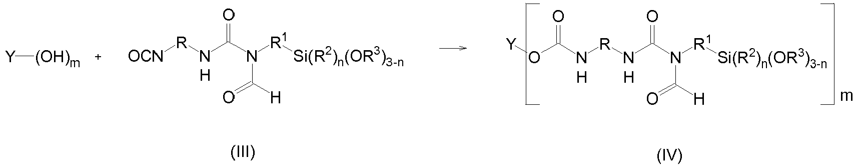 wobei die Variablen wie für Formel (I) definiert sind.

In einer weiteren erfindungsgemäßen Ausführungsform wird ein reaktives Einkomponenten-Klebstoffsystem bzw. Beschichtungssystem, umfassend mindestens eine Verbindung der Formel (I) und/oder mindestens eine Verbindung der Formel (IV), zur Verfügung gestellt.

Erfindungsgemäß wird die Verbindung der Formel (I) und/oder die Verbindung der Formel (IV) zur Herstellung von Kleb- und Dichtstoffen, Lacken, Beschichtungen, Schlichten, Tinten und/oder Druckerfarben verwendet.

In einer weiteren erfindungsgemäßen Ausführungsform wird die Verwendung des erfindungsgemäßen, reaktiven Einkomponenten-Klebstoffsystems bzw. Beschichtungssystems zur Beschichtung Verklebung und/oder Abdichtung von Metall, Holz, Holzwerkstoffen, Glas, Leder, Textilien, Kunststoffen, mineralischen Materialien, Kork, Fasern, Beton, Papier, Pappe und Folien, beschrieben.

Zudem wird erfindungsgemäß ein Verbundkörper offenbart, der durch das erfindungsgemäße Einkomponenten-Klebstoffsystem verbunden wird.

### Definitionen

Wie hierin verwendet, soll der Begriff "alizyklisch" für carbozyklische oder heterozyklische Verbindungen stehen, die nicht zu den aromatischen Verbindungen gehören, wie beispielsweise Cycloalkane, Cycloalkene oder Oxa-, Thia-, Aza- oder Thiazacycloalkane. Spezielle Beispiele hierfür sind Cyclohexylgruppen, Cyclopentylgruppen, sowie deren durch ein oder zwei N- oder O-Atome unterbrochene Derivate wie z.B. Pyrimidin, Pyrazin, Tetrahydropyran oder Tetrahydrofuran.

Wie hierin verwendet, soll der Begriff "araliphatisch" für durch Aryl-Gruppen substituierte Alkylreste stehen, wie z.B. Benzyl, Phenylethyl-, Biphenyl-, etc.

Wie in dieser Anmeldung verwendet, soll der Begriff "gegebenenfalls substituiert" bzw. "substituiert" insbesondere für eine Substitution der relevanten Struktureinheit durch -F, -Cl, -I, -Br, -OH, -OCH₃, -OCH₂CH₃, -O-nPropyl oder -O-Isopropyl, -OCF₃, -CF₃, -S-C₁₋₆-Alkyl und/oder eine andere, ggf. über ein Heteroatom verknüpfte lineare oder verzweigte, aliphatische, alizyklische, araliphatische und/oder aromatische Struktureinheit mit 1 bis 12 Kohlenstoffatomen stehen. Vorzugsweise steht er für eine Substitution durch Halogen (insbesondere -F, -Cl), C₁₋₆-Alkoxy (insbesondere Methoxy und Ethoxy), Hydroxy, Trifluormethyl und Trifluormethoxy.

Wie in dieser Anmeldung verwendet, soll der Begriff "niedermolekular" für Verbindungen stehen, deren Molekülmasse etwa 800 g·mol⁻¹ nicht übersteigt.

Wie in dieser Anmeldung verwendet, soll der Begriff "hochmolekular" für Verbindungen stehen, deren Molekülmasse etwa 800 g·mol⁻¹ übersteigt.

Unter Molekülmasse ist bei Verbindungen, deren Molekülmasse sich nicht aus einer exakt definierten Strukturformel ergibt, wie z.B. bei Polymeren, jeweils das Molekulargewichtszahlenmittel zu verstehen.

Wie in dieser Anmeldung verwendet, soll der Begriff "Monomer" für eine niedermolekulare Verbindung mit funktionellen Gruppen stehen, die am Aufbau von Oligomeren und/oder (Pre-)Polymeren beteiligt ist und eine definierte Molmasse besitzt.

Wie in dieser Anmeldung verwendet, soll der Begriff "Oligomer" für eine Verbindung stehen, in der nur wenige Monomere gleicher oder verschiedener Art wiederholt miteinander verknüpft sind.

Wie in dieser Anmeldung verwendet, soll der Begriff "Prepolymer" für oligomere Verbindungen mit funktionellen Gruppen stehen, die am Endaufbau von Polymeren beteiligt sind.

Wie in dieser Anmeldung verwendet, soll der Begriff "Polymer" für hochmolekulare Verbindungen stehen, in denen Monomere, Oligomere und/oder Prepolymere gleicher oder verschiedener Art wiederholt miteinander verknüpft sind und die sich hinsichtlich Polymerisationsgrad, Molmassenverteilung bzw. Kettenlänge unterscheiden können.

### Erfindungsgemäße Ausführungsformen

Nachfolgend werden erfindungsgemäße Ausführungsformen im Detail beschrieben.

### Verbindungen, der Formeln (I), (II) und (III)

In einer Ausführungsform werden die Verbindungen der allgemeinen Formel (I) bereitgestellt: 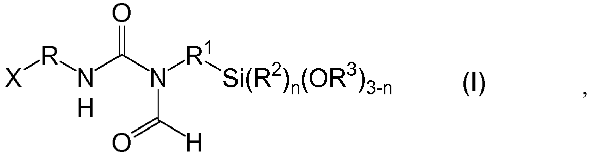 wobei in der Formel (I) gilt:
X stellt Wasserstoff, -NCO oder eine gegebenenfalls substituierte, lineare oder verzweigte, aliphatische, alizyklische, araliphatische, heterozyklische und/oder aromatische Struktureinheit mit 1 bis 40 Kohlenstoffatomen, wobei ein oder mehrere nicht benachbarte Methylengruppen jeweils durch O oder S ersetzt sein können, dar;
R stellt eine mindestens zweiwertige, gegebenenfalls substituierte, lineare oder verzweigte, aliphatische, alizyklische, araliphatische und/oder aromatische Struktureinheit mit 1 bis 40 Kohlenstoffatomen dar, wobei ein oder mehrere nicht benachbarte Methylengruppen jeweils durch O oder S ersetzt sein können;
R¹ stellt eine mindestens zweiwertige, gegebenenfalls substituierte, lineare oder verzweigte, aliphatische, alizyklische, araliphatische und/oder aromatische Struktureinheit mit 1 bis 12 Kohlenstoffatomen dar, wobei ein oder mehrere nicht benachbarte Methylengruppen jeweils durch O oder S ersetzt sein können;
R² und R³ stellen jeweils unabhängig voneinander eine gegebenenfalls substituierte, lineare oder verzweigte, aliphatische Gruppe mit 1 bis 12 Kohlenstoffatomen dar; und
n stellt eine ganze Zahl von 0 bis 2 dar.

In einer bevorzugten Ausführungsform werden die Verbindungen der Formel (II) bereitgestellt: 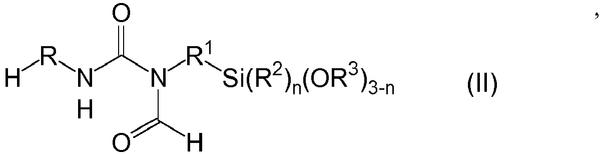 wobei R, R¹, R², R³ und n wie in Formel (I) definiert sind.

In einer besonders bevorzugten Ausführungsform werden die Verbindungen der Formel (III) bereitgestellt: 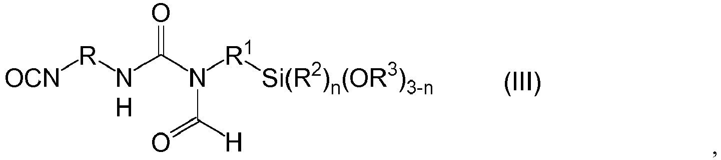 wobei R, R¹, R², R³ und n wie in Formel (I) definiert sind.

### Bevorzugte Substituentenbedentungen in Formeln (I), (II) und (III)

Bevorzugt werden Verbindungen der Formel (I), (II) und/oder (III) zur Verfügung gestellt, wobei jeweils gilt:
R stellt Methylen (-CH₂-), Ethylen (-CH₂CH₂-), Propylen (-CH₂CH₂CH₂-), Isophorylen, 4,4'-Dicyclohexylmethylen, Bis(cyclohexylen), 4,4'-Bisphenylen, o-, m- oder p-Tolylen, oder Hexylen (insbesondere -CH₂CH₂CH₂CH₂CH₂CH₂-), und besonders bevorzugt n-Hexylen, dar;
R¹ stellt Methylen (-CH₂-) oder Propylen (inbesondere n-Propylen -CH₂CH₂CH₂-), besonders bevorzugt n-Propylen, dar;
R² und R³ stellen jeweils unabhängig voneinander -Methyl oder -Ethyl, bevorzugt -Ethyl, dar; und
n stellt eine ganze Zahl von 0 bis 2 dar.

Besonders bevorzugt werden Verbindungen der Formel (I), (II) und/oder (III) bereitgestellt, wobei jeweils gilt:
R stellt Isophorylen, 4,4'-Dicyclohexylmethylen, Bis(cyclohexylen), Bisphenylen, Tolylen oder n-Hexylen dar;
R¹ stellt n-Propylen dar;
R² und R³ stellen jeweils unabhängig voneinander -Methyl oder -Ethyl dar; und
n stellt eine ganze Zahl von 0 bis 2 dar.

Ganz besonders bevorzugt werden Verbindungen der Formel (III) bereitgestellt, bei denen R Isophorylen, Tolylen oder n-Hexylen ist, R¹ n-Propylen ist, R² und R³ -Methyl sind und n=0 ist.

Die erfindungsgemäßen Verbindungen der Formeln (I), (II) und (III) sind selbst als niedermolekulare Bindemittel für Beschichtungen bzw. Kleb- und/oder Dichtstoffe geeignet. Alternativ können die erfindungsgemäßen Verbindungen der Formel (III) zur Herstellung von höhermolekularen Prepolymeren oder Polymeren, die wiederum als Bindemittel für Beschichtungen bzw. Kleb- und/oder Dichtstoff geeignet sind, eingesetzt werden.

Die erfindungsgemäßen Verbindungen der Formel (I) besitzen (bei 23 °C, gemessen mit einem Physica MCR 51 Rheometer der Fa. Anton Paar Germany GmbH (DE) nach DIN EN ISO 3219) Viskositäten im Bereich von 100 bis 10.000 mPa·s, bevorzugt 100 bis 7.000 mPa·s, besonders bevorzugt 100 bis 5.000 mPa·s.

Die erfindungsgemäßen Verbindungen der Formel (I) sind bezüglich ihrer Viskosität zwischen silanmodifizierten Polyharnstoffen und silanmodifizierten Polyurethanen einzuordnen, so dass durch die erfindungsgemäßen Verbindungen eine kostengünstige Optimierung der Viskosität gegenüber den silanmodifizierten Polyharnstoffen ermöglicht wird.

### Verfahrens zur Verstellung der erfindungsgemäßen Verbindungen

Die erfindungsgemäßen Verbindungen der Formel (I) können nach dem folgenden zweistufigen Verfahren hergestellt werden, wobei die Gruppen X, R, R¹, R², R³ und n wie in Formel (I) definiert sind und R' bevorzugt eine Alkylgruppe mit 1 bis 4 Kohlenstoffatomen darstellt:

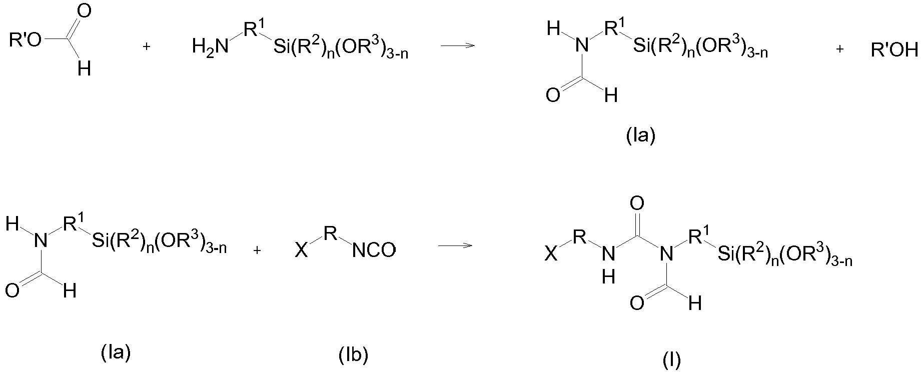

Zunächst wird bevorzugt ein Überschuss des Ameisensäurealkylesters R'O-CHO zum Amin H₂N-R¹-Si(R²)ₙ(OR³)₃₋ₙ getropft, wobei R' bevorzugt eine Alkylgruppe mit 1 bis 4 Kohlenstoffatomen darstellt. Besonders bevorzugt ist als Ameisensäurealkylester R'O-CHO, Methylformiat oder Ethylformiat. Bevorzugt wird 1 Mol Amin mit einem Überschuss von 1,01 bis 6 Mol Ameisensäurealkylester R'O-CHO, besonders bevorzugt 1,05 bis 4 Mol, bei der Siedetemperatur des Ameisensäurealkylesters umgesetzt. Nach beendeter Reaktion wird der überschüssige Ameisensäurealkylester R'O-CHO und der entstandene Alkohol R'-OH mittels Dünnschicht-Destillation abdestilliert und das entstandene Produkt (Ia) gegebenenfalls abfiltriert.

Im Anschluss wird die Verbindung der Formel (Ia) mit X-R-NCO, bevorzugt unter inerten Bedingungen, bei Temperaturen von 20 bis 200 °C, vorzugsweise 40 bis 160 °C, umgesetzt. Dabei werden die beiden Komponenten, je nach Substituent X in X-R-NCO, in einem Äquivalentverhältnis von Isocyanatgruppen zu Formamidgruppen von mindestens 1 : 1 bis höchstens 40 : 1, bevorzugt von 8 : 1 bis höchstens 30 : 1 und besonders bevorzugt von 10 : 1 bis höchstens 25 : 1 eingesetzt. Die Umsetzung kann in Lösung oder lösemittelfrei in Substanz, bevorzugt jedoch lösemittelfrei, ausgeführt werden. Um überschüssiges X-R-NCO abzutrennen, wird das Reaktionsgemisch anschließend mit geeigneter Förderrate, wie z. B. 600 mL/h, über eine Dünnschichtverdampfungsapparatur unter vermindertem Druck, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, geleitet.

Die Herstellung der Verbindungen mit der Formel (I) kann ohne den Einsatz von Katalysatoren durchgeführt werden. Gegebenenfalls können zur Beschleunigung der Umsetzung aber auch bekannte Katalysatoren hinzugegeben werden. Beispielsweise können tert. Amine, wie z. B. Triethylamin, Tributylamin, Dimethylbenzylamin, Diethylbenzylamin, Pyridin, Methylpyridin, Dicyclohexylmethylamin, Dimethyl-cyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethyl-aminoethylpiperidin, N,N'- Dimethylpiperazin, N-Methyl-N'-dimethylaminopiperazin, 1,2-Dimethylimidazol, 2-Methylimidazol, N,N-Dimethylimidazol-ß-phenylethylamin, 1,4-Diazabicyclo-(2,2,2)-octan (DABCO) und Bis-(N,N- dimethylaminoethyl)adipat, Amidine, wie z. B. 1,5-Diazabicyclo[4.3.0]nonen (DBN), 1,8-Diaza- bicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyldiethanolamin, N-Ethyldiethanolamin, Dimethylaminoethanol und 2-(N,N-Dimethylaminoethoxy)ethanol, N,N',N"- Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-2-ethylhexanoat, Wismut(III)-octoat, Wismut(III)-neodecanoat, Zinkchlorid, Zink-2-ethylcaproat, Zink(II)trifluoromethansulfonat (Zinktriflat), Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat, eingesetzt werden.

Bevorzugte einzusetzende Katalysatoren sind tertiäre Amine, Amidine und Zinnverbindungen bzw. Zinkverbindungen der genannten Art. Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)- dilaurat (DBTL) und Zink(II)trifluoromethansulfonat (Zinktriflat).

Die oben beispielhaft genannten Katalysatoren können bei der Umsetzung einzeln oder in Form beliebiger Mischungen eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren, bezogen auf die Gesamtmenge der verwendeten Ausgangsverbindungen, zum Einsatz.

Der Verlauf der Umsetzung kann durch z. B. titrimetrische Bestimmung des NCO-Gehalts verfolgt werden. Nach Erreichen des angestrebten NCO-Gehalts wird die Reaktion abgebrochen.

Besonders bevorzugt werden die erfindungsgemäßen Verbindungen der Formel (III) nach dem oben genannten Verfahren hergestellt, wobei die Gruppen R, R¹, R², R³ und n wie in Formel (I) definiert sind:

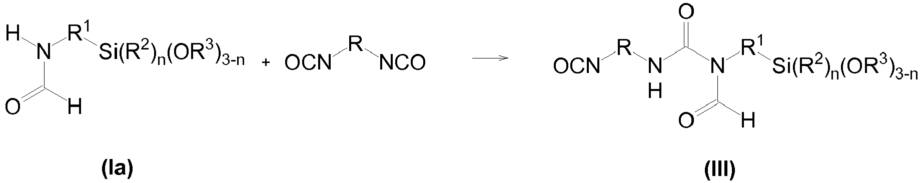

Hierbei wird ein silanmodifiziertes Formamid mit der Formel (Ia) mit einem Diisocyanat OCN-R-NCO, bevorzugt unter inerter Schutzgasatmosphäre (z.B. Stickstoff oder Argon), umgesetzt.

Geeignete Diisocyanate OCN-R-NCO zur Herstellung silanmodifizierter Formamide der Formel (III) sind beispielsweise ausgewählt aus der Gruppe, bestehend aus 1,4-, 1,3- und/oder 1,2-Cyclohexandiisocyanat, 1-Methyl-2,4-diisocyanato-cyclohexan, 1-Methyl-2,6-diisocyanatocyclohexan, Tetramethylendiisocyanat, Oktamethylendiisocyanat, Dekamethylendiisocyanat, Dodekamethylendiisocyanat, H₆-2,4- und/oder 2,6-Diisocyanatotoluol, 4,4'-Diisocyanatodiphenylmethan, 2,4'-Diisocyanatodiphenylmethan, 2,2'-Diisocyanatodiphenylmethan, meta- und/oder para-Xylylendiisocyanat, 2,4-Diisocyanatotoluol und/oder 2,6-Diisocyanatotoluol, Isopropenyldimethyltoluylendiisocyanat, α,α,α',α,'-Tetra-methyl-m- und/oder p-Xylylendiisocyanat, 1,6-Hexamethylendiisocyanat, Trimethylhexandiisocyanat, Tetramethylhexandiisocyanat, Nonantriisocyanat, 1-Isocyanato-3,3,5-trimethyl-5-isocyanatomethylcyclohexan (Isophorondiisocyanat), 4,4'-Diisocyanatodicyclohexylmethan und/oder 2,4'-Diisocyanatodicyclohexylmethan und/oder 2,2'-Diisocyanatodicyclohexylmethan sowie deren Mono- und Dimethyl-substituierten Derivate.

Besonders bevorzugt werden für OCN-R-NCO Hexamethylendiisocyanat (HDI), Isophorondiisocyanat (IPDI), 2,4-Diisocyanatotoluol (TDI) und/oder 2,6-Diisocyanatotoluol, 4,4'-Diisocyanatodiphenylmethan, 2,4'-Diisocyanatodiphenylmethan, 2,2'-Diisocyanatodiphenylmethan oder Isomerengemische hiervon eingesetzt.

Die Umsetzung der Verbindungen der Formel (Ia) mit OCN-R-NCO erfolgt bei Temperaturen von 20 bis 200 °C, vorzugsweise 40 bis 160 °C. Dabei werden die beiden Komponente in einem Äquivalentverhältnis von Isocyanatgruppen zu Formamidgruppen von mindestens 6 : 1 bis höchstens 40 : 1, bevorzugt von 8 : 1 bis höchstens 30 : 1 und besonders bevorzugt von 10 : 1 bis höchstens 25 : 1 eingesetzt. Die Umsetzung kann in Lösung oder lösemittelfrei in Substanz, bevorzugt jedoch lösemittelfrei, durchgeführt werden.

Die Herstellung der Verbindungen mit der Formel (III) kann ohne den Einsatz von Katalysatoren durchgeführt werden. Gegebenenfalls können zur Beschleunigung der Umsetzung aber auch die oben zur Herstellung der Verbindungen der Formel (I) genannten Katalysatoren mitverwendet werden.

Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)- dilaurat (DBTL) und Zink(II)trifluoromethansulfonat (Zinktriflat).

Die oben beispielhaft genannten Katalysatoren können bei der Umsetzung einzeln oder in Form beliebiger Mischungen eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren, bezogen auf die Gesamtmenge der verwendeten Ausgangsverbindungen, zum Einsatz.

Der Verlauf der Umsetzung kann wiederum durch z.B. titrimetrische Bestimmung des NCO-Gehalts verfolgt werden. Nach Erreichen des angestrebten NCO-Gehalts wird die Reaktion abgebrochen.

In einer bevorzugten Ausführungsform wird nach der Umsetzung der Verbindungen der Formel (Ia) mit dem Diisocyanat OCN-R-NCO ein nicht umgesetzter Überschuss an monomeren Diisocyanat OCN-R-NCO bis auf einen Restgehalt von weniger als 1 Gew.-%, vorzugsweise von weniger als 0,5 Gew.-%, besonders bevorzugt von weniger als 0,3 Gew.-%, bezogen auf die Gesamtmasse des Reaktionsproduktes, vom Reaktionsprodukt abgetrennt. Das Reaktionsgemisch wird dabei vorzugsweise durch Dünnschicht-Destillation im Vakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von überschüssigen monomeren Diisocyanaten OCN-R-NCO befreit.

Die so aufgearbeiteten Reaktionsgemische liefern im allgemeinen Produktgemische, die aus mehr als 85 Gew.-%, bevorzugt mehr als 95 Gew.-%, an erfindungsgemäßen Verbindungen der Formel (III), weniger als 1 Gew.-% an monomerem (nicht umgesetztem) Diisocyanat und weniger als 15 Gew.-%, bevorzugt weniger als 10 Gew.-% an Verbindungen der nachfolgenden Formel (IIIa), bezogen auf die Gesamtmasse des Reaktionsproduktes, besteht. 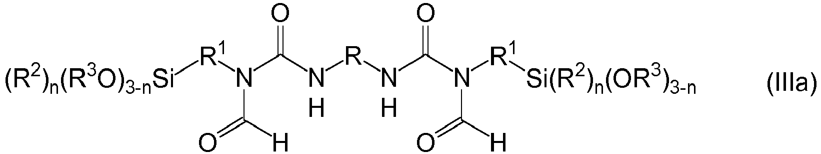 wobei die Variablen wie in Formel (I) definiert sind.

Die so hergestellten Verbindungen der Formel (III) stellen klare, praktisch farblose Produkte dar, die in Abhängigkeit vom gewählten Ausgangsdiisocyanat niedrig- bis hochviskose Flüssigkeiten darstellen und Restgehalte an monomeren Ausgangsdiisocyanaten von weniger als 1,0 Gew.-%, vorzugsweise von weniger als 0,5 Gew.-%, besonders bevorzugt von weniger als 0,3 Gew.-%, bezogen auf die Gesamtmasse des Reaktionsproduktes, aufweisen.

Um eine vorzeitige Vernetzung der Silangruppen der Verbindungen der Formel (I) und/oder (III) während der erfindungsgemäßen Herstellung zu unterbinden, kann der Zusatz von Wasserfängern vorteilhaft sein. Beispielsweise können ortho-Ameisenester, wie z. B. Triethylorthoformiat, Vinylsilane, wie z. B. Vinyltrimethoxysilan, oder organische Phosphate, wie z. B. Dibutylphosphat, eingesetzt werden. Die Wasserfänger kommen, falls notwendig, in Mengen von bis zu 5 Gew.-%, vorzugsweise bis zu 2 Gew.-%, bezogen auf die Gesamtmenge der Ausgangsmaterialien, zum Einsatz.

Falls Katalysatoren und/oder Wasserfänger eingesetzt werden, können diese den Ausgangsverbindungen bereits vor Beginn der eigentlichen Umsetzung zugesetzt werden. Es ist aber auch möglich, diese Hilfsmittel dem Reaktionsgemisch zu einem beliebigen Zeitpunkt während der Umsetzung zuzusetzen.

In einer bevorzugten Ausführungsform finden die hier beschriebenen Verfahren unter Schutzgasatmosphäre, wie beispielsweise Stickstoff, statt.

### Silanmodifizierte Verbindungen, der Formel (IV)

Besonders bevorzugt werden die Verbindungen der Formel (III), wie oben definiert, zur Herstellung silanmodifizierter Verbindungen bzw. Prepolymere mit der Formel (IV) eingesetzt: 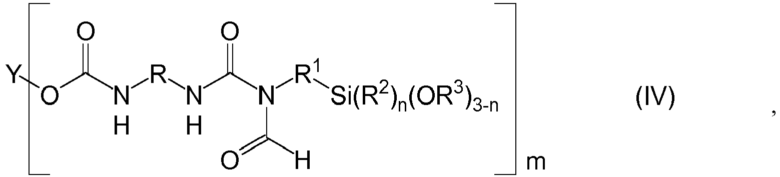 wobei R, R¹, R², R³ und n die in Anspruch 1 angegebenen Bedeutungen haben, Y eine m-wertige, gegebenenfalls substituierte, lineare oder verzweigte, aliphatische, alizyklische, araliphatische, heterozyklische und/oder aromatische Struktureinheit mit 1 bis 40 Kohlenstoffatomen oder eine um m OH-Radikale reduzierte Struktureinheit eines Polyols, oder eines Polyurethan-, Polyharnstoff-, Polyester-, Polyether-, Polycarbonat-, Polyacetal-, Polyacrylat-, Polyesteramid- oder Polythioetherpolyols ist und m eine (ggf. auch rationale) Zahl von 1 bis 10 ist.

Besonders bevorzugt werden Verbindungen der Formel (IV) bereitgestellt, wobei R n-Hexylen ist, R¹ n-Propylen ist, R² und R³ -Methyl sind und n=0 ist.

### Verfahren zur Herstellung der silanmodifizierten Verbindungen der Formel (IV)

Die erfindungsgemäßen, silanmodifizierten Prepolymere der Formel (IV) können durch das nachfolgend aufgeführte Verfahren (A) hergestellt werden:
(A) 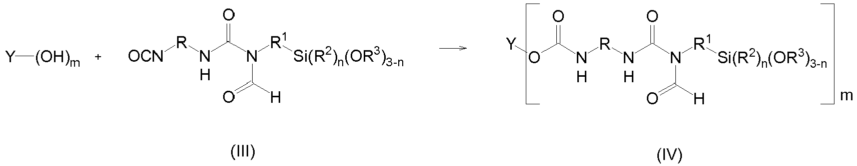 wobei R, R¹, R², R³, n, Y und m wie in Anspruch 7 definiert sind.

Erfindungsgemäß kann die Verbindung der Formel (IV) durch Umsetzung von Y-(OH)ₘ mit einer Verbindung der Formel (III), die wie oben beschrieben hergestellt wurde, dargestellt werden.

Beispielsweise können für Y-(OH)ₘ mehrwertige Alkohole und/oder Ether- oder Esteralkohole mit 2 bis 14, vorzugsweise 4 bis 10 Kohlenstoffatomen, eingesetzt werden, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydro-bisphenol), 1,2,3-Propantriol, 1,2,4-Butantriol, 1,1,1-Trimethylolethan, 1,2,6-Hexantriol, 1,1,1-Tri-methylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.0^{2,6}]decane, Di-Trimethylolpropan, 2,2-Bis(hydroxymethyl)-1,3-propandiol (Pentaerythrit), 2,2,6,6-Tetrakis(hydroxymethyl)-4-oxaheptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester und/oder Gemische der zuvor genannten Verbindungen, eingesetzt werden.

Bevorzugt handelt es sich bei dem Rest Y um einen Rest, der sich von einem polymeren Polyol, Polyetherpolyol, Polyesterpolyol, Polycarbonatpolyol und/oder Polyacrylatpolyol ableitet, wie sie in der Polyurethanchemie bekannt sind. Üblicherweise besitzen diese polymeren Polyole ein zahlenmittleres Molekulargewicht von 200 bis 22.000, vorzugsweise von 250 bis 18.000, besonders bevorzugt von 250 bis 12.000. Ein breiter Überblick über geeignete polymere Polyole findet sich beispielsweise in N. Adam et al.: "Polyurethanes", Ullmann's Encyclopedia of Industrial Chemistry, Electronic Release, 7th ed., chap. 3.2 - 3.4, Wiley-VCH, Weinheim 2005.

Geeignete Polyetherpolyole sind beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069966, Seite 4, Zeile 20 bis Seite 5, Zeile 23 genannten Art, sofern sie den oben gemachten Angaben hinsichtlich Funktionalität und Molekulargewicht entsprechen. Besonders bevorzugte Polyetherpolyole sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die beispielsweise gemäß Angew. Chem. 72, 927 (1960) durch Polymerisation von Tetrahydrofuran erhältlichen Polytetramethylenetherglykole mit zahlenmittleren Molekuargewichten von 400 g/mol bis 4000 g/mol.

Geeignete Polyesterpolyole sind die beispielsweise solche der in der EP-A 0 978 523, Seite 5, Zeilen 17 bis 47 oder der EP-A 0 659 792, Seite 6, Zeilen 32 bis 45 genannten Art, sofern sie den oben gemachten Angaben hinsichtlich Funktionalität und Molekulargewicht entsprechen. Besonders bevorzugte Polyesterpolyole sind Kondensationsprodukte mehrwertiger Alkohole, wie z. B. 1,2-Ethandiol, 1,2-Propandiol, Diethylenglykol, 1,4-Butandiol, 1,6-Hexandiol, Neopentylglykol, 1,4-Cyclohexandimethanol, 1,4-Cyclohexandiol, Perhydrobisphenol, 1,1,1-Trimethylolpropan, 1,2,3-Propantriol, Pentaerythrit und/oder Sorbitol, mit unterschüssigen Mengen an mehrwertigen Carbonsäuren bzw. Carbonsäureanhydriden, wie z. B. Bernsteinsäure, Adipinsäure, Sebazinsäure, Dodecandisäure, Glutarsäureanhydrid, Maleinsäureanhydrid, Phthalsäureanhydrid, Isophthalsäure, Terephthalsäure, Trimellitsäure Hexahydrophthalsäureanhydrid und/oder Tetrahydrophthalsäureanhydrid, oder solche, wie sie in an sich bekannter Weise aus Laktonen, wie z. B. ε-Caprolacton, und einfachen mehrwertigen Alkoholen, wie z.B. den oben beispielhaft genannten, als Startermolekülen unter Ringöffnung erhältlich sind.

Geeignete Polycarbonatpolyole sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Geeignete Polycarbonatpolyole sind auch solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Laktonen, wie insbesondere ε-Caprolacton, und anschließende Reaktion der dabei entstehenden Polyesterdiole mit Diphenyl- oder Dimethylcarbonat erhalten werden können. Ebenfalls geeignete Polycarbonatpolyole sind solche, die neben Carbonatstrukturen zusätzlich Ethergruppen enthalten. Hierbei handelt es sich insbesondere um die an sich bekannten Polyethercarbonatpolyole, wie sie beispielsweise nach dem Verfahren der EP-A 2046861 durch katalytische Umsetzung von Alkylenoxiden (Epoxiden) und Kohlendioxid in Anwesenheit von H-funktionellen Startersubstanzen erhältlich sind.

Geeignete Polyacrylatpolyole sind beispielsweise solche der in WO 2011/124710 Seite 10, Zeile 32 bis Seite 13, Zeile 18 genannten Art, sofern sie den oben gemachten Angaben hinsichtlich Funktionalität und Molekulargewicht entsprechen. Besonders bevorzugte Polyacrylatpolyole sind Polymerisate bzw. Copolymerisate von Hydroxyalkylestern der Acrylsäure oder Methacrylsäure, wie z. B. Hydroxyethyl(meth)acrylat, Hydroxypropyl(meth)acrylat oder Hydroxy- butyl(meth)acrylat, gegebenenfalls gemeinsam mit Acrylsäurealkylestern und/oder Methacrylsäurealkylestern, wie z. B. Methyl(meth)acrylat, Ethyl(meth)acrylat, n-Butyl(meth)acrylat, iso-Butyl(meth)acrylat, 2-Ethylhexyl(meth)acrylat, Cyclohexyl(meth)acrylat, Isobornyl(meth)acrylat, Lauryl(meth)acrylat, Styrol oder anderen copolymerisierbaren olefinisch ungesättigten Monomeren, wie z. B. Acrylsäure, Methacrylsäure oder Maleinsäuredimethylester.

Geeignete Polyole sind beispielsweise auch die bekannten, durch Umsetzung einfacher Glykole, wie z. B. Diethylenglykol, Triethylenglykol, 4,4'-Dioxethoxy-diphenyl-dimethylmethan (Addukt von 2 mol Ethylenoxid an Bisphenol A) oder Hexandiol, mit Formaldehyd erhältlichen Polyacetalpolyole oder auch durch Polykondensation cyclischer Acetale, wie z. B. Trioxan, hergestellte Polyacetale.

Weitere geeignete Polyole sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxid-Ringöffnung erhältlichen speziellen Polyole.

Hydroxylgruppen enthaltende Polybutadiene können ebenfalls als Polyole dienen.In einer bevorzugten Ausführungsform der Erfindung werden als Komponente Y-(OH)ₘ Polyether-, Polyester-, Polycarbonat- und/oder Polyacrylatpolyole eingesetzt.

Die Polyole kommen beim erfindungsgemäßen Verfahren einzeln oder in Form beliebiger Mischungen untereinander zum Einsatz. Sie können sowohl in lösemittelfreier Form als auch in üblichen Lösemitteln gelöst vorliegen.

Die Umsetzung der Verbindungen der Formel Y-(OH)ₘ mit Verbindungen der Formel (III) erfolgt bei Temperaturen von 20 bis 200 °C, vorzugsweise 40 bis 160 °C. Dabei wird ein Äquivalentverhältnis von Isocyanatgruppen zu Hydroxylgruppen von 0,7 : 1 bis 1,2 : 1, vorzugsweise von 0,8 : 1 bis 1,1 : 1, besonders bevorzugt von 0,9 : 1 bis 1,05 : 1 eingehalten.

Das erfindungsgemäße Verfahren kann unkatalysiert durchgeführt werden. Zur Beschleunigung der Urethanisierungsreaktion können gegebenenfalls aber auch in der Isocyanatchemie übliche Katalysatoren mitverwendet werden. Geeignete Katalysatoren wurden bereits oben zur Herstellung der Verbindung der Formel (I) beschrieben.

Besonders bevorzugte Katalysatoren sind 1,4-Diazabicyclo-(2,2,2)-octan (DABCO), 1,5-Di-azabicyclo[4.3.0]nonen (DBN), 1,8-Diazabicyclo(5.4.0)undecen-7 (DBU) sowie Dibutylzinn(IV)-dilaurat (DBTL).

Diese Katalysatoren können beim erfindungsgemäßen Verfahren einzeln oder in Form beliebiger Mischungen untereinander eingesetzt werden und kommen dabei, falls notwendig, in Mengen von 0,001 bis 1,0 Gew.-%, bevorzugt 0,01 bis 0,5 Gew.-%, berechnet als Gesamtmenge an eingesetzten Katalysatoren, bezogen auf die Gesamtmenge der Ausgangsmaterialien, zum Einsatz.

Die nach dem Verfahren hergestellten, erfindungsgemäßen silanmodifizierten Verbindungen bzw. Prepolymere der Formel (IV) stellen klare, praktisch farblose Produkte dar, die in Abhängigkeit vom gewählten Ausgangsdiisocyanat und Polyol niedrig- bis hochviskose Flüssigkeiten darstellen und Restgehalte an monomeren Ausgangsdiisocyanaten von weniger als 1,0 Gew.-%, vorzugsweise von weniger als 0,5 Gew.-%, besonders bevorzugt von weniger als 0,3 Gew.-%, bezogen auf die Gesamtmasse des Reaktionsproduktes, aufweisen.

Eventuell noch nachweisbare NCO-Restgehalte können allgemein durch Zugabe von Methanol abgefangen werden.

Um eine vorzeitige Vernetzung der Silangruppen während des erfindungsgemäßen Verfahrens zu unterbinden, kann der Zusatz von Wasserfängern vorteilhaft sein. Beispielsweise können ortho-Ameisenester, wie z. B. Triethylorthoformiat, Vinylsilane, wie z. B. Vinyltrimethoxysilan, oder organische Phosphaten, wie z. B. Dibutylphosphat, eingesetzt werden. Die Wasserfänger kommen, falls notwendig, in Mengen von bis zu 5 Gew.-%, vorzugsweise bis zu 2 Gew.-%, bezogen auf die Gesamtmenge der Ausgangsmaterialien, zum Einsatz.

Bei Mitverwendung von Katalysatoren und/oder Wasserfängern können diese den Ausgangsverbindungen bereits vor Beginn der eigentlichen Umsetzung zugesetzt werden. Es ist aber auch möglich, diese Hilfsmittel dem Reaktionsgemisch zu einem beliebigen Zeitpunkt während der Urethanisierungsreaktion zuzusetzen.

Der Verlauf der Umsetzung kann erfindungsgemäß durch z. B. titrimetrische Bestimmung des NCO-Gehaltes oder IR-spektroskopisch verfolgt werden. Im Anschluss an die Urethanisierungsreaktion, d. h. nach vollständigem Umsatz von Isocyanat- und Hydroxylgruppen bzw. Formamidgruppen, erhält man als Produkte des erfindungsgemäßen Verfahrens die erfindungsgemäßen, silanmodifizierte Acylharnstoffgruppen enthaltenden Prepolymere der Formel (IV).

Die erfindungsgemäßen Verbindungen bzw. Prepolymere der Formel (IV) besitzen je nach Anwendungsbereich Viskositäten im Bereich von 10 bis 1.000.000 mPa·s, bevorzugt 50 bis 500.000 mPa·s, besonders bevorzugt 500 bis 200.000 mPa·s.

Die hier offenbarten silanmodifizierten Prepolymere der Formel (IV) können erfindungsgemäß zur Herstellung von Kleb- und Dichtstoffen, Beschichtungen, Schlichten, Tinten und/oder Druckerfarben eingesetzt werden.

Vorteil dieses Verfahrens ist, dass über die eingesetzten Verbindungen der Formel Y-(OH)ₘ bzw. der eingesetzten Diisocyanate die Eigenschaften der silanmodifizierten Prepolymere der Formel (IV) an eine Vielzahl verschiedenster Anwendungen angepasst werden kann.

### Reaktives Einkomponenten-Klebstoffsystem

Erfindungsgemäß werden die Verbindungen der Formel (I), wie oben beschrieben, und/oder die Verbindungen der Formel (IV), wie oben beschrieben, für ein reaktives Einkomponenten-Klebstoffsystem eingesetzt. Das reaktive Einkomponenten-Klebstoffsystem ist dadurch gekennzeichnet, dass es mindestens eine Verbindung der Formel (I) und/oder mindestens eine Verbindung der Formel (IV) enthält.

Unter Einwirkung von Feuchtigkeit bzw. Wasser erfolgt die Hydrolyse der hydrolysierbaren Reste der Silangruppen und im Anschluss die Vernetzung (Aushärtung) der dabei entstehenden Silanole unter Abspaltung von Wasser.

Dabei können auch Katalysatoren mitverwendet werden, die die Hydrolyse und Kondensation der Silanolgruppen beschleunigen. Derartige Katalysatoren sind einem Fachmann bekannt. Es können beispielsweise Säuren, wie z. B. Schwefelsäure, p-Toluolsulfonsäure, Trifluormethansulfonsäure, Essigsäure, Trifluoressigsäure und Dibutylphosphat, Basen, wie z. B. N-substituierte Amidine, wie 1,5-Diaza- bicyclo[4.3.0]non-5-en (DBN) und 1,5-Diazabicyclo[5.4.0]undec-7-en (DBU), aber auch Metallsalze und -chelate, wie z. B. Tetraisopropyltitanat, Tetrabutyltitanat, Titan(IV)acetylacetonat, Aluminium-tri-sec-butylat, Aluminiumacetylacetonat, Aluminiumtriflat oder Zinntriflat, verwendet werden.

Diese Katalysatoren kommen, falls überhaupt, in Mengen von bis zu 5 Gew.-%, vorzugsweise bis zu 2 Gew.-%, bezogen auf das Gewicht der eingesetzten silanmodifizierten Prepolymere zum Einsatz. In Abhängigkeit von der Art und Menge des eingesetzten Katalysators kann die Aushärtung des aus den erfindungsgemäßen Verbindungen der Formel (I) und/oder (IV) formulierten Einkomponenten-Klebstoffsystems über einen weiten Temperaturbereich, beispielsweise von -20 bis 200°C, vorzugsweise von 0 bis 180°C, besonders bevorzugt von 20 bis 160°C, erfolgen.

Gegebenenfalls können dem erfindungsgemäßen, reaktiven Einkomponenten-Klebstoffsystem auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)-methyldiethoxysilan, (3-Glycidyloxypropyl)trimethoxysilan, Phenyltrimethoxysilan, Phenyltriethoxysilan oder silanfunktionelle Copolymerisate der in der US 4 499 150 genannten Art, oder Gemische solcher Silanverbindungen als Reaktionspartner zugesetzt werden.

Ebenso kann das reaktive Einkomponenten-Klebstoffsystem der Erfindung gegebenenfalls weitere Additive und/oder Hilfsstoffe enthalten, die im Stand der Technik bekannt sind. Hier sind z. B. Pigmente, Antioxidantien, Wasserfänger, Füllstoffe, Slip-Additive, Verlaufsmittel, Rheologie-Additive, Schaumstabilisatoren, Hydrophobierungsmittel, Luftporenbildner, klebverstärkende Additive (Haftvermittler), Compoundierungsmittel, Weichmacher, Alterungsschutzmittel, Flammschutzmittel und/oder UV-Stabilisatoren zu nennen.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phthalsäureester, Adipinsäureester, Alkylsulfonsäureester des Phenols, Phosphorsäureester oder auch höhermolekulare Polypropylenglykole genannt.

Als Wasserfänger seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-amino-propyl-trimethoxy und/oder N-Aminoethyl-3-aminopropyl-methyl-dimethoxysilan, Epoxysilane und/oder Mercaptosilane.

Neben der Verwendung als Einkomponenten-Klebestoffsystem können die erfindungsgemäßen Verbindungen der Formel (I) und/oder (IV) auch üblichen Einkomponenten- und/oder Zweikomponenten-Polyurethan-Klebstoffsystemen, beispielsweise als Additiv, zugemischt werden.

Wird das erfindungsgemäße, reaktive Einkomponenten-Klebstoffsystem, wie oben beschrieben, zuvor auf den zu verklebenden Substraten aufgebracht, kommt durch die oben beschriebene Vernetzung eine dauerhafte Verklebung bzw. Abdichtung der Substrate zu Stande.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft, aber erfindungsgemäß nicht unbedingt notwendig.

### Substrate

Geeignete Substrate, die zur Verklebung und/oder Abdichtung über das erfindungsgemäße, reaktive Einkomponenten-Klebstoffsystem geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Einkomponenten-Klebstoffsystem zur Verklebung und/oder Abdichtung von Metallen, Glas und/oder Kunststoffen eingesetzt.

Geeignete Metallsubstrate können im Allgemeinen aus allen auf dem Gebiet üblichen Metallen bzw. Metalllegierungen gefertigt werden. Bevorzugt kommen Metalle, wie zum Beispiel Aluminium, Edelstahl, Stahl, Titan, eisenhaltige Metalle und Legierungen zum Einsatz. Die zu verklebenden Substrate können außerdem aus unterschiedlichen Metallen aufgebaut sein.

Die zu verklebenden Kunststoffsubstrate sind beispielsweise Polycarbonate (PC), Polyamide, Polyvinylchlorid, Polyurethane, Polyvinylacetat, Polyacrylate bzw. Polymethacrylate, Polyethylen, Polystyrol, Polypropylen und/oder Polyester, wie z.B. Polybutylenterephthalat (PBT) und/oder Polyethylenterephthalat (PET).

Die Substrate können außerdem lackiert oder bedruckt sein.

Weiterhin können die zu verklebenden Substrate jede beliebige Form besitzen, die für die jeweilige Anwendung des erhaltenen Verbundkörpers notwendig ist. In der einfachsten Form sind die Substrate eben. Es können aber ebenso auch dreidimensionale Substrate mit dem erfindungsgemäßen, reaktiven Einkomponenten-Klebstoffsystem verklebt werden.

### Verbundkörper

Ebenso wird erfindungsgemäß ein Verbundkörper bereitgestellt, der durch das erfindungsgemäße, reaktive Einkomponenten-Klebstoffsystem, wie oben definiert, verbunden ist.

### Experimenteller Teil

Die nachfolgenden Beispiele dienen zur Verdeutlichung der vorliegenden Erfindung, sollen aber keinesfalls als Einschränkung des Schutzbereichs verstanden werden.

Alle Prozentangaben beziehen sich, soweit nichts anderes angegeben wird, auf das Gewicht.

Die Bestimmung der NCO-Gehalte erfolgte titrimetrisch nach DIN EN ISO 11909.

OH-Zahlen wurden titrimetrisch nach DIN 53240-2: 2007-11, Säure-Zahlen nach DIN 3682 5 bestimmt. Die angegebenen OH-Gehalte wurde aus den analytisch ermittelten OH-Zahlen errechnet.

Die Rest-Monomeren Gehalte wurden nach DIN EN ISO 10283 gaschromatographisch mit internem Standard gemessen.

Die Anteile an Bisaddukt sowie Molekulargewichte wurden durch Gelpermationschromatographie in Anlehnung an DIN 55672-1 (Gelpermeationschromatographie (GPC) - Teil 1: Tetrahydrofuran (THF) als Elutionsmittel) gegen Polystyrolstandards ermittelt, mit der Änderung, dass mit einer Flußrate von 0,6 ml/min statt 1,0 ml/min gearbeitet wurde. Die den Chromatogrammen entnommenen Anteile an Bisaddukt in Flächen-%, welche softwaregestützt ermittelt wurden, wurden näherungsweise jeweils Anteilen in Gew.-% gleichgesetzt und als solche, bezogen auf die Gesamtmenge an Mono- und Bisaddukt, angegeben.
Sämtliche Viskositätsmessungen erfolgten mit einem Physica MCR 51 Rheometer der Fa. Anton Paar Germany GmbH (DE) nach DIN EN ISO 3219.

### Synthese der silanmodifizierten Formamide mit der Formol (Ia):

### Beispiel 1: N-(3-Trimethoxysilylpropyl)formamid

In einem Kolben mit Thermometer, KPG-Rührer, Rückflusskühler und Tropftrichter werden unter Stickstoffatmosphäre bei Raumtemperatur 1075,8 g (6 mol) 3-Aminoproplytrimethoxysilan vorgelegt. Unter Rühren werden 378,6 g (6,3 mol) Methylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 50°C) das überschüssige Methylformiat und der entstandene Methylalkohol abdestilliert. Man erhält eine farblose Flüssigkeit mit einer Viskosität von 11 mPa·s bei 23°C.

### Beispiel 2: N-(3-Methyldimethoxysilylpropyl)formamid

In einem Kolben mit Thermometer, KPG-Rührer, Rückflusskühler und Tropftrichter werden unter Stickstoffatmosphäre bei Raumtemperatur 99,6 g (0,6 mol) 3-Aminopropylmethyldimethoxysilan vorgelegt. Unter Rühren werden 40,3 g (0,67 mol) Methylformiat zugetropft, so dass 50°C nicht überschritten werden. Nach Abklingen der Exothermie werden 4 Stunden bei Raumtemperatur nachgerührt und anschließend unter reduziertem Druck (0,1 mbar bei 50°C) das überschüssige Methylformiat und der entstandene Methylalkohol abdestilliert. Man erhält eine farblose Flüssigkeit mit einer Viskosität 11 mPas bei 23°C.

### Beispiel 3: N-(3-Triethoxysilylpropyl)formamid

In einem Kolben mit Thermometer, KPG-Rührer, Rückflusskühler und Tropftrichter werden unter Stickstoffatmosphäre bei Raumtemperatur 221,4 g (1 mol) 3-Aminopropyl-triethoxysilan vorgelegt. Unter Rühren werden 77,8 g (1,05 mol) Ethylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 80°C) das überschüssige Ethylformiat und der entstandene Ethylalkohol abdestilliert. Man erhält eine farblose Flüssigkeit mit einer Viskosität von 13 mPa·s bei 23°C.

### Beispiel 4: N-(3-Methyldiethoxysilylpropyl)formamid

In einem Kolben mit Thermometer, KPG-Rührer, Rückflusskühler und Tropftrichter werden unter Stickstoffatmosphäre bei Raumtemperatur 497,9 g (2,6 mol) 3-Aminopropylmethyldiethoxysilan vorgelegt. Unter Rühren werden 212,1 g (2,8 mol) Ethylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 80°C) das überschüssige Ethylformiat und der entstandene Ethylalkohol abdestilliert. Man erhält eine farblose Flüssigkeit mit einer Viskosität von 12 mPas bei 23°C.

### Synthese der silanmodifizierten Verbindungen mit der allgemeinen Formel (I):

### Beispiel 5:

In einem Kolben mit Thermometer, KPG-Rührer, Rückflusskühler und Tropftrichter werden unter Stickstoffatmosphäre 672 g (4 mol) HDI (1,6-Hexamethylendiisocyanat) bei 80°C vorgelegt. Anschließend werden unter Rühren 207,1 g (1 mol) N-(3-trimethoxysilylpropyl)formamid (aus Beispiel 1) über 1 Stunde zudosiert. Nach erfolgter Zugabe wird der Ansatz bei 80°C bis zum Erreichen eines konstanten Isocyanatgehalts (34,7 Gew%) gerührt. Das erhaltene Reaktionsgemisch wird mit einer Förderrate von 600 ml/h über eine Dünnschichtverdampfungsapparatur bei einem Druck von 0,03 mbar und einer Temperatur von 130°C geleitet, um das überschüssige HDI zu entfernen. Man erhält eine farblose Flüssigkeit mit einer Viskosität von 103 mPa·s bei 23°C, einem Isocyanatgehalt von 10,36 Gew%, einem freien HDI Gehalt von 0,07 Gew% und einem BisAddukt-Anteil von 15,7%.

Die Hauptkomponente des erhaltenen Produktes entspricht der Formel (VI):

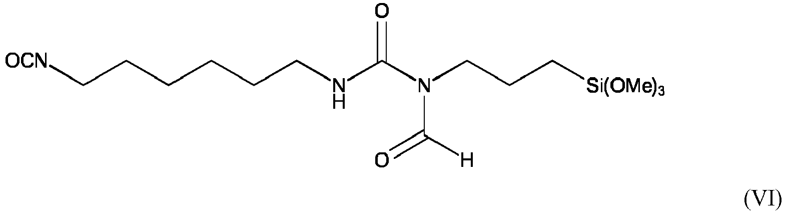

### Beispiel 6: (Vergleichsbeispiel zu Beispiel 5)

In einem Kolben mit Thermometer, KPG-Rührer, Rückflusskühler und Tropftrichter werden unter Stickstoffatmosphäre 3150 g (18,75 mol) HDI (1,6-Hexamethylendiisocyanat) bei 80°C vorgelegt. Anschließend werden unter Rühren 448,2 g (2,5 mol) 3-Aminopropyltrimethoxysilan über 1 Stunde zudosiert. Direkt nach der Zugabe des ersten Tropfens ist die Bildung einer Trübung zu beobachten, die sich im Laufe der Zugabe verstärkt und zu einem Festkörper agglomeriert. Eine zielführende Weiterverarbeitung des Ansatzes wie in Beispiel 5 ist nicht möglich.

### Beispiel 7:

In einem Kolben mit Thermometer, KPG-Rührer, Rückflusskühler und Tropftrichter werden unter Stickstoffatmosphäre 1667,3 g (7,5 mol) IPDI (Isophorondiisocyanat) bei 80°C vorgelegt. Anschließend werden unter Rühren 207,1 g (1 mol) N-(3-trimethoxysilylpropyl)formamid (aus Beispiel 1) über 1 Stunde zudosiert. Nach erfolgter Zugabe wird der Ansatz bei 80°C bis zum Erreichen eines konstanten Isocyanatgehalts (31,3 Gew%) gerührt. Das erhaltene Reaktionsgemisch wird mit einer Förderrate von 800 ml/h über eine Dünnschichtverdampfungsapparatur bei einem Druck von 0,02 mbar und einer Temperatur von 140°C geleitet, um das überschüssige IPDI zu entfernen. Man erhält eine farblose Flüssigkeit mit einer Viskosität von 6.900 mPa·s bei 23°C, einem Isocyanatgehalt von 9,9 Gew%, einem freien IPDI Gehalt von 0,32 Gew% und einem BisAddukt-Anteil von 10,3%.

### Beispiel 8:

In einem Kolben mit Thermometer, KPG-Rührer, Rückflusskühler und Tropftrichter werden unter Stickstoffatmosphäre 3960,0 g (22,5 mol) TDI (2,4-Toluylendiisocyanat) bei 80°C vorgelegt. Anschließend werden unter Rühren 621,3 g (3 mol) N-(3-trimethoxysilylpropyl)formamid (aus Beispiel 1) über 1 Stunde zudosiert. Nach erfolgter Zugabe wird der Ansatz bei 80°C bis zum Erreichen eines konstanten Isocyanatgehalts (38,1 Gew%) gerührt. Das erhaltene Reaktionsgemisch wird mit einer Förderrate von 400 ml/h über eine Dünnschichtverdampfungsapparatur bei einem Druck von 0,02 mbar und einer Temperatur von 140°C geleitet, um das überschüssige TDI zu entfernen. Man erhält eine gelbliche Flüssigkeit mit einer Viskosität von 7.080 mPa·s bei 23°C, einem Isocyanatgehalt von 11,6 Gew%, einem freien TDI Gehalt von 0,41 Gew% und einem Bis-Addukt-Anteil von 14,7%.

### Synthese der silanmodifizierten Prepolymere mit der Formel (IV):

### Beispiel 9:

In einen Kolben mit Thermometer, KPG-Rührer, Rückflusskühler und Tropftrichter werden unter Stickstoffatmosphäre 262,5 g Rizinusöl und 13 mg DBTL bei 80°C vorgelegt und 307,3 g des silanmodifizierten Formamids aus Beispiel 6 so zugetropft, dass die Reaktionstemperatur 90°C nicht übersteigt. Nach erfolgter Zugabe wird das Reaktionsgemisch bei 60°C gerührt bis ein konstanter Isocyanatgehalt erreicht wird (0,7 Gew%). Der verbleibende Isocyanatgehalt wird durch Zugabe von Methanol abgefangen Das erhaltene Bindemittel ist klar und hat eine Viskosität von 13.500 mPa·s bei 23°C.

Zur weiteren Verarbeitung wird das Bindemittel auf einen Festkörperanteil von 50% mit 1-Methoxypropylacetat-2 (MPA) eingestellt und 0,25% Lupragen^{®} N 700 (1,8-Diazabicyclo-5,4,0-undecen-7) der Firma BASF SE zugegeben und auf Glasplatten mit einer Schichtdicke (nass) von 50µm gerakelt. Nach einer Trocknungszeit von 4h bei 23°C und einer relativen Luftfeuchtigkeit von 50% ist die Beschichtung grifftrocken und zeigt nach 4 Tagen gute Lösemittelbeständigkeiten gegenüber Xylol, 1-Methoxypropylacetat-2, Ethylacetat und Aceton.

### Beispiel 10:

In einen Kolben mit Thermometer, KPG-Rührer, Rückflusskühler und Tropftrichter werden unter Stickstoffatmosphäre 92,8 g Desmophen^{®} A 160 SN (Acrylharz 60%ig in Solventnaphtha 100; Hydroxylgehalt 2,7% auf Festharz), Bayer MaterialScience AG, 67,3 g 2-Ethyl-1,3-hexandiol und 9g Orthoameisensäuretriethylester mit 10 mg DBTL bei 80°C vorgelegt und 413,0 g des Silanformamid-HDI-Addukts (aus Beispiel 5) so zugetropft, dass die Reaktionstemperatur 90°C nicht übersteigt. Nach erfolgter Zugabe wird das Reaktionsgemisch bei 60°C gerührt bis kein Isocyanat mehr nachzuweisen ist. Das erhaltene Bindemittel ist klar und hat eine Viskosität von 230.000 mPas bei 23°C.

Zur weiteren Verarbeitung wird das Bindemittel auf einen Festkörperanteil von 50% mit 1-Methoxypropylacetat-2 (MPA) eingestellt und 0,25% Lupragen^{®} N 700 (1,8-Diazabicyclo-5,4,0-undecen-7) der Firma BASF SE zugegeben und auf Glasplatten mit einer Schichtdicke (nass) von 50µm gerakelt. Nach einer Trocknungszeit von 4h bei 23°C und einer relativen Luftfeuchtigkeit von 50% ist die Beschichtung grifftrocken und zeigt nach 4 Tagen gute Lösemittelbeständigkeiten gegenüber Xylol, 1-Methoxypropylacetat-2, Ethylacetat und Aceton.

### Beispiel 11:

In einen Kolben mit Thermometer, KPG-Rührer, Rückflusskühler und Tropftrichter werden unter Stickstoffatmosphäre 1024 g (0,12 mol) eines Polypropylenglykols (Acclaim Polyol 8200N; OH-Zahl 14 mgKOH/g) mit 50 mg DBTL bei 60°C vorgelegt und 109 g des Silanformamid-HDI-Addukts (aus Beispiel 5) so zugetropft, dass die Reaktionstemperatur 80°C nicht übersteigt. Nach erfolgter Zugabe wird das Reaktionsgemisch bei 60°C gerührt bis ein konstanter Isocyanatgehalt erreicht wird (0,05 Gew%). Der verbleibende Isocyanatgehalt wird durch Zugabe von Methanol abgefangen und die Reaktionsmasse durch Zugabe von 100 mg Dibutylphosphat und 2 g Vinyltrimethoxysilan als Wasserfänger stabilisiert. Das erhaltene Bindemittel ist klar und hat eine Viskosität von 11.600 mPas bei 23°C.

### Beispiel 12:

In einen Kolben mit Thermometer, KPG-Rührer, Rückflusskühler und Tropftrichter werden unter Stickstoffatmosphäre 950 g (0,1 mol) eines Polypropylenglykols (Acclaim Polyol 18200N; OH-Zahl 6,5 mgKOH/g) mit 50 mg DBTL bei 60°C vorgelegt und 50 g des Silanformamid-HDI-Addukts (aus Beispiel 5) so zugetropft, dass die Reaktionstemperatur 80°C nicht übersteigt. Nach erfolgter Zugabe wird das Reaktionsgemisch bei 60°C gerührt bis ein konstanter Isocyanatgehalt erreicht wird (0,08 Gew%). Der verbleibende Isocyanatgehalt wird durch Zugabe von Methanol abgefangen und die Reaktionsmasse durch Zugabe von 50 mg Dibutylphosphat und 2 g Vinyltrimethoxysilan als Wasserfänger stabilisiert. Das erhaltene Bindemittel ist klar und hat eine Viskosität von 75.700 mPas bei 23°C.

### Beispiel 13:

In einen Kolben mit Thermometer, KPG-Rührer, Rückflusskühler und Tropftrichter werden unter Stickstoffatmosphäre 999 g (0,12 mol) eines Polypropylenglykols (Acclaim^{®} Polyol 8200N; OH-Zahl 14 mgKOH/g; Bayer MaterialScience AG,) mit 60 mg DBTL bei 60°C vorgelegt und 101,0 g des Silanformamid-TDI-Addukts (aus Beispiel 8) so zugetropft, dass die Reaktionstemperatur 80°C nicht übersteigt. Nach erfolgter Zugabe wird das Reaktionsgemisch bei 60°C gerührt bis ein konstanter Isocyanatgehalt erreicht wird (0,02 Gew%). Der verbleibende Isocyanatgehalt wird durch Zugabe von Methanol abgefangen und die Reaktionsmasse durch Zugabe von 60 mg Dibutylphosphat und 2,2 g Vinyltrimethoxysilan als Wasserfänger stabilisiert. Das erhaltene Bindemittel ist klar und hat eine Viskosität von 163.000 mPas bei 23°C.

### Anwendunsstechnische Beispiele für Kleb- und Dichtstoffe

Zur Beurteilung der anwendungstechnischen Eigenschaften der verschiedenen Polymere wurden diese in folgender Formulierung verarbeitet:

| | **Einsatzmenge in Gew.-%** |
|---|---|
| Polymer | 31,34 |
| Füllstoff (Socal U₁S₂) | 47,01 |
| Weichmacher (Jayflex DINP) | 18,80 |
| Trocknungsmittel (Dynasylan VTMO) | 1,88 |
| Haftvermittler (Dynasylan 1146) | 0,94 |
| Katalysator (Lupragen N 700) | 0,03 |

Zur Herstellung der Formulierung wird das Bindemittel mit Füllstoff (Socal^{®} U1S2 der Fa. Solvay), Weichmacher (Jayflex™ DINP der Fa. Exxon) und Trocknungsmittel (Dynasylan^{®} VTMO der Fa. Evonik) versetzt und in einem Vakuumdissolver mit Wandabstreifer bei 3000 U/min vermischt. Anschließend wird der Haftvermittler (Dynasylan^{®} 1146 der Fa. Evonik) hinzugefügt und innerhalb von 5 min bei 1000 U/min untergerührt. Zuletzt wird der Katalysator (Lupragen^{®} N700 der Fa. BASF SE) bei 1000 U/min eingerührt und abschließend die fertige Mischung im Vakuum entlüftet.

Zur Messung der physikalischen Eigenschaften werden sowohl Membranen von 2 mm Dicke, als auch Probenkörper auf Glassubstrat gemäß DIN EN ISO 11600 hergestellt. Die Prüfung der shore-Härte erfolgt an den Membranen gemäß DIN 53505. Der Modulus bei 50 % Dehnung wird entsprechend DIN EN ISO 11600 bei 23 °C gemessen.

Die folgende Tabelle zeigt die erhaltenen Ergebnisse:

| | Bsp. 14 (Polymer aus Bsp. 11) | Bsp. 15 (Polymer aus Bsp. 12) |
|---|---|---|
| Shore A Härte | 61 | 17 |
| 50 %-Modulus [N/mm²] | 3,0 | 0,8 |
| Filmtrocknungszeit, 100µm [min] | 45 | 30 |

## Patentansprüche

1. Verbindung der allgemeinen Formel (I): 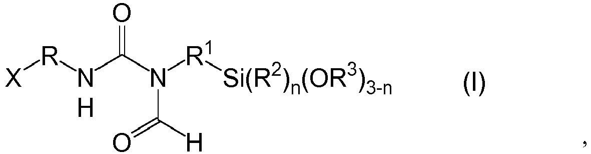 wobei gilt:
X stellt eine gegebenenfalls substituierte, lineare oder verzweigte, aliphatische, alizyklische, araliphatische, heterozyklische und/oder aromatische Struktureinheit mit 1 bis 40 Kohlenstoffatomen, wobei ein oder mehrere nicht benachbarte Methylengruppen jeweils durch O oder S ersetzt sein können, -H oder -NCO dar;
R stellt eine mindestens zweiwertige, gegebenenfalls substituierte, lineare oder verzweigte, aliphatische, alizyklische, araliphatische und/oder aromatische Struktureinheit mit 1 bis 40 Kohlenstoffatomen dar, wobei ein oder mehrere nicht benachbarte Methylengruppen jeweils durch O oder S ersetzt sein können;
R¹ stellt eine mindestens zweiwertige, gegebenenfalls substituierte, lineare oder verzweigte, aliphatische, alizyklische, araliphatische und/oder aromatische Struktureinheit mit 1 bis 12 Kohlenstoffatomen dar, wobei ein oder mehrere nicht benachbarte Methylengruppen jeweils durch O oder S ersetzt sein können;
R² und R³ stellen jeweils unabhängig voneinander eine gegebenenfalls substituierte, lineare oder verzweigte, aliphatische Gruppe mit 1 bis 12 Kohlenstoffatomen dar; und
n stellt eine ganze Zahl von 0 bis 2 dar.

2. Verbindung nach Anspruch 1, wobei R² und R³ jeweils unabhängig voneinander - Methyl oder -Ethyl darstellen.

3. Verbindung nach Anspruch 1 oder 2, wobei R -Hexyl darstellt, R¹ -Propyl darstellt, R² und R³ jeweils unabhängig voneinander -Methyl oder -Ethyl darstellen und n eine ganze Zahl von 0 bis 2 darstellt.

4. Verbindung nach einem der vorgehenden Ansprüche, die durch die nachfolgende Formel (III) dargestellt wird: 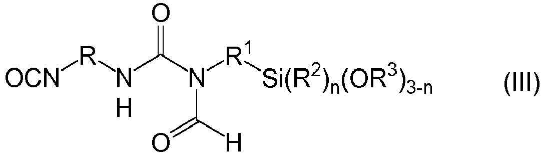 wobei R, R¹, R², R³ und n wie in Anspruch 1 definiert sind.

5. Verbindung nach Anspruch 1, die durch die nachfolgende Formel (VI) dargestellt wird:

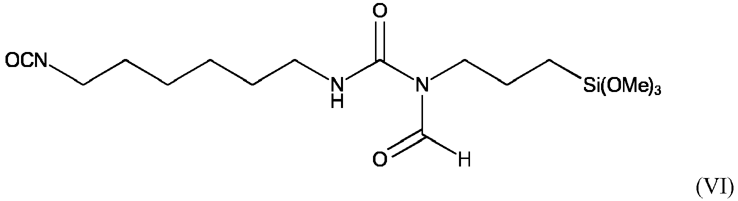

6. Verfahren zur Herstellung der Verbindung der Formel (I) nach Anspruch 1, umfassend Umsetzung eines silanmodifizierten Formamids der Formel (Ia) mit einem Isocyanat der Formel (Ib): 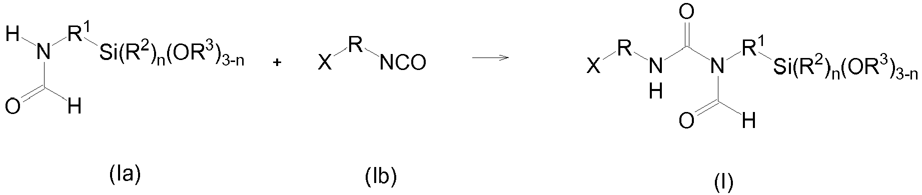 wobei X, R, R¹, R², R³ und n wie in Anspruch 1 definiert sind.

7. Verwendung der Verbindung nach Anspruch 1 bis 5, zur Herstellung einer silanmodifizierten Verbindung der Formel (IV): 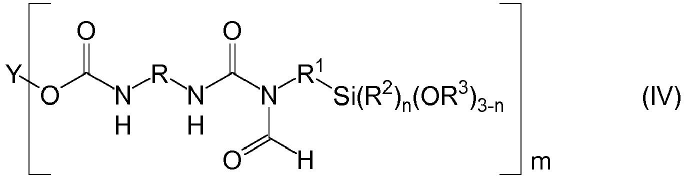
durch Umsetzung der Verbindung der Formel (I), wobei X eine -NCO Gruppe darstellt, mit einer Verbindung der Formel Y-(OH)ₘ,
wobei R, R¹, R², R³ und n wie in Anspruch 1 definiert sind,
Y eine gegebenenfalls substituierte, lineare oder verzweigte, aliphatische, alizyklische, araliphatische, heterozyklische und/oder aromatische Struktureinheit mit 1 bis 40 Kohlenstoffatomen oder eine um m OH-Radikale reduzierte Struktureinheit eines mehrwertigen Alkohols (Polyols), oder eines Polyurethan-, Polyharnstoff-, Polyester-, Polyether-, Polycarbonat-, Polyacetal-, Polyacrylat-, Polyesteramid-, oder Polythioetherpolyols ist und
m eine Zahl von 1 bis 10 darstellt.

8. Silanmodifizierte Verbindung der Formel (IV): 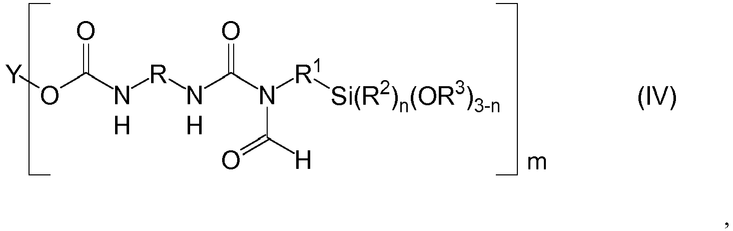 wobei R, R¹, R², R³ und n wie in Anspruch 1 definiert sind und Y und m wie in Anspruch 7 definiert sind.

9. Verfahren zur Herstellung des silanmodifizierten Prepolymers der Formel (IV) nach Anspruch 8, umfassend:
Umsetzung einer Verbindung der Formel (III) mit einer Verbindung der Formel Y-(OH)ₘ: 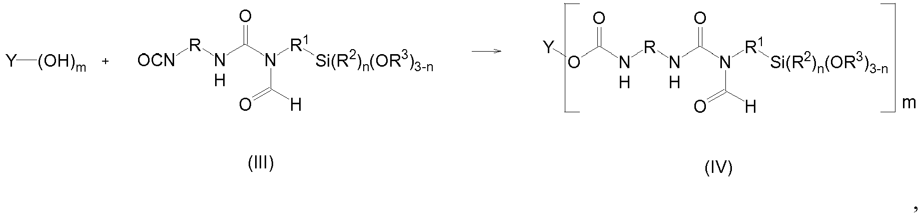 wobei R, R¹, R², R³ und n wie in Anspruch 1 definiert sind und Y und m wie in Anspruch 7 definiert sind.

10. Verwendung der Verbindung nach einem der Ansprüche 1 bis 5 oder der Verbindung nach Anspruch 8 zur Herstellung von Kleb- und Dichtstoffen, Lacken, Beschichtungen, Schlichten, Tinten und/oder Druckerfarben.

11. Reaktives Einkomponenten-Beschichtungssystem, umfassend mindestens eine Verbindung nach einem der Ansprüche 1 bis 5 oder mindestens eine Verbindung nach Anspruch 8.

12. Verwendung des reaktiven Einkomponenten-Beschichtungssystems nach Anspruch 11 zur Beschichtung von Metall, Holz, Holzwerkstoffen, Glas, Leder, Textilien, Kunststoffen, mineralischen Materialien, Kork, Fasern, Beton, Papier, Pappe und Folien.

13. Reaktives Einkomponenten-Klebstoffsystem, umfassend mindestens eine Verbindung nach einem der Ansprüche 1 bis 5 oder mindestens eine Verbindung nach Anspruch 8.

14. Verwendung des reaktiven Einkomponenten-Klebstoffsystems nach Anspruch 13 zur Verklebung und/oder Abdichtung von Metall, Holz, Holzwerkstoffen, Glas, Leder, Textilien, Kunststoffen, mineralischen Materialien, Kork, Fasern, Beton, Papier, Pappe und Folien.

15. Kit, umfassend das reaktive Einkomponenten-Klebstoffsystem nach Anspruch 13, zur Verklebung und/oder Abdichtung von Metall, Holz, Holzwerkstoffen, Glas, Leder, Textilien, Kunststoffen, mineralischen Materialien, Kork, Fasern, Beton, Papier, Pappe und Folien.

16. Verbundkörper, der durch das reaktive Einkomponenten-Klebstoffsystem nach Anspruch 13 oder durch das Kit nach Anspruch 15 verbunden ist.

## Claims

1. Compound of the general formula (I): 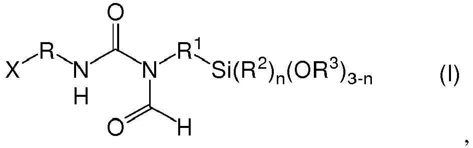 wherein:
X represents an optionally substituted, linear or branched, aliphatic, alicyclic, araliphatic, heterocyclic and/or aromatic structural unit having from 1 to 40 carbon atoms, wherein one or more non-adjacent methylene groups can each be replaced by O or S; or X represents -H or -NCO;
R represents an at least divalent, optionally substituted, linear or branched, aliphatic, alicyclic, araliphatic and/or aromatic structural unit having from 1 to 40 carbon atoms, wherein one or more non-adjacent methylene groups can each be replaced by O or S;
R1 represents an at least divalent, optionally substituted, linear or branched, aliphatic, alicyclic, araliphatic and/or aromatic structural unit having from 1 to 12 carbon atoms, wherein one or more non-adjacent methylene groups can each be replaced by O or S;
R2 and R3 each independently of the other represents an optionally substituted, linear or branched, aliphatic group having from 1 to 12 carbon atoms; and
n represents an integer from 0 to 2.

2. Compound according to claim 1, wherein R2 and R3 each independently of the other represents methyl or ethyl.

3. Compound according to claim 1 or 2, wherein R represents hexyl, R1 represents propyl, R2 and R3 each independently of the other represents methyl or ethyl, and n represents an integer from 0 to 2.

4. Compound according to any one of the preceding claims, which is represented by the following formula (III): 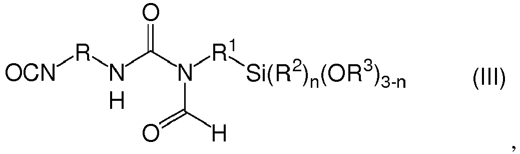 wherein R, R1, R2, R3 and n are as defined in claim 1.

5. Compound according to claim 1, which is represented by the following formula (VI):

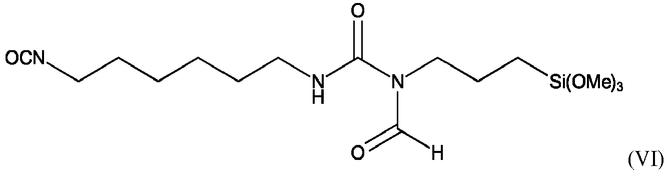

6. Process for the preparation of the compound of formula (I) according to claim 1, comprising reacting a silane-modified formamide of formula (Ia) with an isocyanate of formula (Ib): 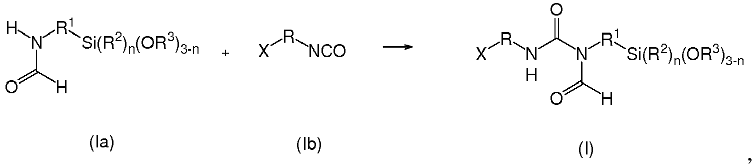 wherein X, R, R1, R2, R3 and n are as defined in claim 1.

7. Use of the compound according to claim 1 to 5 for the preparation of a silane-modified compound of formula (IV): 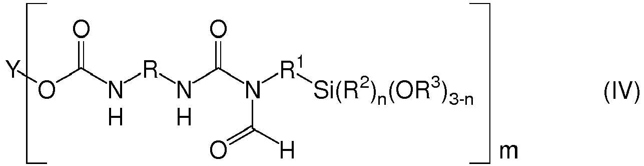
by reacting the compound of formula (I) wherein X represents an -NCO group with a compound of the formula Y-(OH)m,
wherein R, R1, R2, R3 and n are as defined in claim 1,
Y is an optionally substituted, linear or branched, aliphatic, alicyclic, araliphatic, heterocyclic and/or aromatic structural unit having from 1 to 40 carbon atoms or a structural unit reduced by m OH radicals of a polyhydric alcohol (polyol) or of a polyurethane, polyurea, polyester, polyether, polycarbonate, polyacetal, polyacrylate, polyester amide or polythioether polyol, and
m represents a number from 1 to 10.

8. Silane-modified compound of formula (IV): 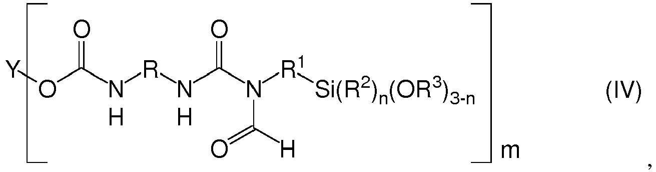 wherein R, R1, R2, R3 and n are as defined in claim 1 and Y and m are as defined in claim 7.

9. Process for the preparation of the silane-modified prepolymer of formula (IV) according to claim 8, comprising:
reacting a compound of formula (III) with a compound of the formula Y-(OH)m: 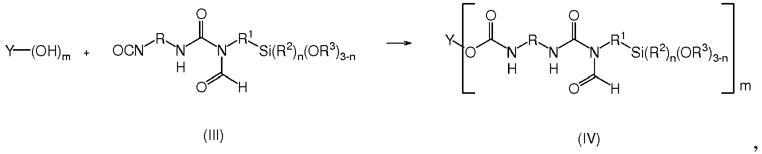 wherein R, R1, R2, R3 and n are as defined in claim 1 and Y and m are as defined in claim 7.

10. Use of the compound according to any one of claims 1 to 5 or of the compound according to claim 8 for the production of adhesives and sealing materials, lacquers, coatings, sizes, inks and/or printing inks.

11. Reactive one-component coating system comprising at least one compound according to any one of claims 1 to 5 or at least one compound according to claim 8.

12. Use of the reactive one-component coating system according to claim 11 for coating metal, wood, wood-based materials, glass, leather, textiles, plastics materials, mineral materials, cork, fibres, concrete, paper, cardboard and films.

13. Reactive one-component adhesive system comprising at least one compound according to any one of claims 1 to 5 or at least one compound according to claim 8.

14. Use of the reactive one-component adhesive system according to claim 13 for the adhesive bonding and/or sealing of metal, wood, wood-based materials, glass, leather, textiles, plastics materials, mineral materials, cork, fibres, concrete, paper, cardboard and films.

15. Kit comprising the reactive one-component adhesive system according to claim 13, for the adhesive bonding and/or sealing of metal, wood, wood-based materials, glass, leather, textiles, plastics materials, mineral materials, cork, fibres, concrete, paper, cardboard and films.

16. Composite bonded by the reactive one-component adhesive system according to claim 13 or by the kit according to claim 15.

## Revendications

1. Composé de formule générale (I): 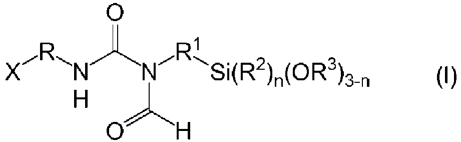 dans laquelle :
X représente une unité structurale le cas échéant substituée, linéaire ou ramifiée, aliphatique, alicyclique, araliphatique, hétérocyclique et/ou aromatique, comprenant 1 à 40 atomes de carbone, un ou plusieurs groupes méthylène non adjacents pouvant être remplacés par O ou S ; -H ; ou -NCO;
R représente une unité structurale au moins divalente, le cas échéant substituée, linéaire ou ramifiée, aliphatique, alicyclique, araliphatique et/ou aromatique, comprenant 1 à 40 atomes de carbone, un ou plusieurs groupes méthylène non adjacents pouvant être remplacés par O ou S;
R1 représente une unité structurale au moins divalente, le cas échéant substituée, linéaire ou ramifiée, aliphatique, alicyclique, araliphatique et/ou aromatique, comprenant 1 à 12 atomes de carbone, un ou plusieurs groupes méthylène non adjacents pouvant être remplacés par O ou S;
R2 et R3 représentent, à chaque fois indépendamment l'un de l'autre, un groupe le cas échéant substitué, linéaire ou ramifié, aliphatique, comprenant 1 à 12 atomes de carbone ; et n représente un nombre entier de 0 à 2.

2. Composé selon la revendication 1, R2 et R3 représentant, à chaque fois indépendamment l'un de l'autre, -méthyle ou -éthyle.

3. Composé selon la revendication 1 ou 2, R représentant -hexyle, R1 représentant - propyle, R2 et R3 représentant, à chaque fois indépendamment l'un de l'autre, - méthyle ou -éthyle et n représentant un nombre entier de 0 à 2.

4. Composé selon l'une quelconque des revendications précédentes, qui est représenté par la formule (III) suivante: 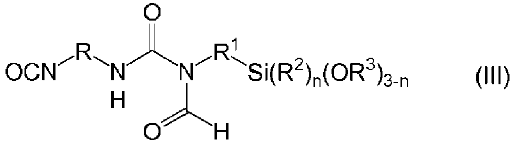 dans laquelle R, R1, R2, R3 et n sont définis comme dans la revendication 1.

5. Composé selon la revendication 1, qui est représenté par la formule (VI) suivante:

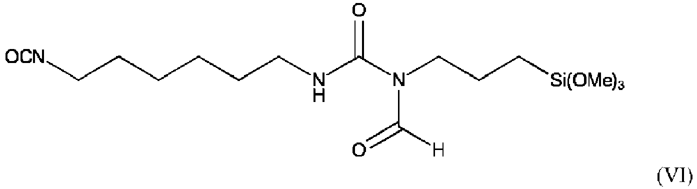

6. Procédé pour la préparation du composé de formule (I) selon la revendication 1, comprenant la réaction d'un formamide modifié par silane de formule (Ia) avec un isocyanate de formule (Ib): 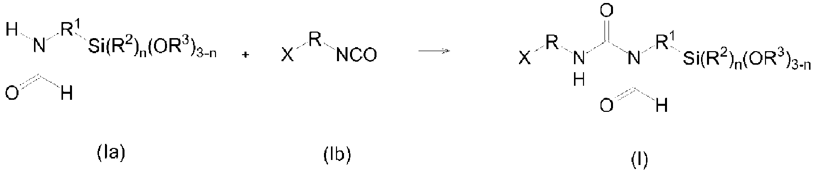 dans lesquelles X, R, R1, R2, R3 et n sont définis comme dans la revendication 1.

7. Utilisation d'un composé selon la revendication 1 à 5 pour la préparation d'un composé modifié par silane de formule (IV): 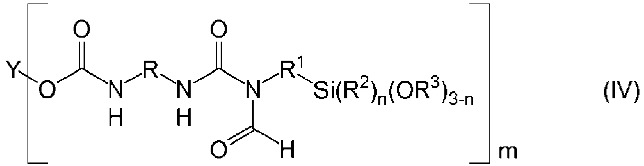
par réaction du composé de formule (I), X représentant un groupe -NCO, avec un composé de formule Y-(OH)m,
R, R1, R2, R3 et n étant définis comme dans la revendication 1,
Y représentant une unité structurale le cas échéant substituée, linéaire ou ramifiée, aliphatique, alicyclique, araliphatique, hétérocyclique et/ou aromatique, comprenant 1 à 40 atomes de carbone ou une unité structurale réduite de m radicaux OH d'un alcool polyvalent (polyol) ou d'un polyuréthane-polyol, d'un polyurée-polyol, d'un polyester-polyol, d'un polyéther-polyol, d'un polycarbonate-polyol, d'un polyacétal-polyol, d'un polyacrylate-polyol, d'un polyesteramide-polyol ou d'un polythioéther-polyol et
m représentant un nombre de 1 à 10.

8. Composé modifié par silane de formule (IV): 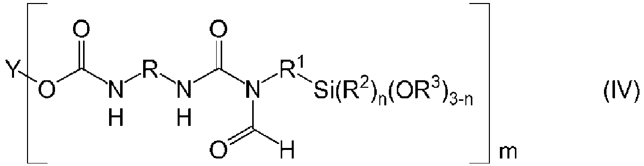 dans laquelle R, R1, R2, R3 et n sont définis comme dans la revendication 1 et Y et m sont définis comme dans la revendication 7.

9. Procédé pour la préparation du prépolymère modifié par silane de formule (IV) selon la revendication 8, comprenant:
la réaction d'un composé de formule (III) avec un composé de formule Y-(OH)m : 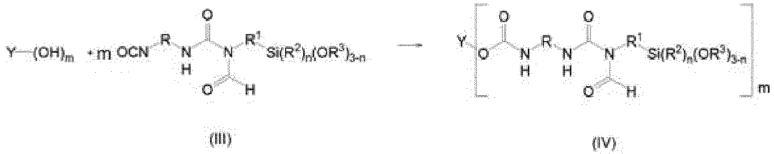 dans lesquelles R, R1, R2, R3 et n sont définis comme dans la revendication 1 et Y et m sont définis comme dans la revendication 7.

10. Utilisation du composé selon l'une quelconque des revendications 1 à 5 ou du composé selon la revendication 8 pour la préparation d'adhésifs ou de matériaux d'étanchéité, de laques, de revêtements, de colles, d'encres et/ou d'encres d'imprimerie.

11. Système de revêtement réactif à un composant, comprenant au moins un composé selon l'une quelconque des revendications 1 à 5 ou au moins un composé selon la revendication 8.

12. Utilisation du système de revêtement réactif à un composant selon la revendication 11 pour le revêtement de métal, de bois, de matériaux à base de bois, de verre, de cuir, de textiles, de matériaux synthétiques, de matériaux minéraux, de liège, de fibres, de béton, de papier, de carton-pâte et de feuilles.

13. Système adhésif réactif à un composant, comprenant au moins un composé selon l'une quelconque des revendications 1 à 5 ou au moins un composé selon la revendication 8.

14. Utilisation du système adhésif réactif à un composant selon la revendication 13 pour le collage et/ou le bouchage de métal, de bois, de matériaux à base de bois, de verre, de cuir, de textiles, de matériaux synthétiques, de matériaux minéraux, de liège, de fibres, de béton, de papier, de carton-pâte et de feuilles.

15. Kit, comprenant le système adhésif réactif à un composant selon la revendication 13 pour le collage et/ou le bouchage de métal, de bois, de matériaux à base de bois, de verre, de cuir, de textiles, de matériaux synthétiques, de matériaux minéraux, de liège, de fibres, de béton, de papier, de carton-pâte et de feuilles.

16. Corps composite, assemblé par le système adhésif réactif à un composant selon la revendication 13 ou par le kit selon la revendication 15.
